# EUROPEAN PATENT APPLICATION

(11) **EP 3 672 268 A1**
(43) Date of publication of application: **24.06.2020**
(21) Application number: 18215812.1
(22) Date of filing: 22.12.2018
(51) Int. Cl.: H04N 21/81, H04N 21/84, H04N 21/434, G06F 16/40, H04N 21/433

(54) **CENTRALIZED CONTENT-RELATED OBJECTS DATABASE IN MIDDLEWARE LAYER**

(71) Applicant: Advanced Digital Broadcast S.A., 1293 Bellevue (CH)
(72) Inventor: Polak, Michal, 65-119 Zielona Gora (PL)
(74) Representative: Kancelaria Eupatent.pl Sp. z.o.o

(57) **Abstract**

A digital television receiver comprising: hardware (102) components comprising a processing unit (151), a memory (142) and at least one content interface (143, 144); a software stack that comprises an operating system (130) layer, a middleware (120) layer and an application (110) layer; wherein the middleware (120) comprises: a database (201) having at least one table (202-205) comprising objects representing content-related objects available from various content sources accessible via the at least one content interface (143, 144); and at least one application programming interface (210) configured to allow access to the database (201) for applications of the application (110) layer.

## Description

### TECHNICAL FIELD

The present disclosure relates to managing information on content-related objects available at digital television receivers, in particular to managing information at a middleware layer of the software stack.

### BACKGROUND

Customer devices (digital television receivers such as Set Top Boxes, STBs) offer several possibilities of receiving downstream data, such as video content, from various sources, such as a broadcasting distribution network (satellite, cable, terrestrial), the Internet (OTT, VOD) etc. Therefore users of digital television systems can instantly access large amount of content at any given time from various sources.

A well-known method of presenting available content related to channels (live services) is a grid-type electronic programme guide (EPG) or an interactive program guide (IPG), which typically has a timeline along its X axis and lists available channels on a Y axis, wherein programmes (events) available at a particular channel at a particular time i.e. current and future events as well as events in the past (catch-up events) are presented in cells within the grid. A digital television receiver, a Set-Top-Box, retrieves EPG information from Event Information Tables (EIT) sections and processes them into events that are then displayed on a TV screen. Other types of content objects, for example recordings, are usually available through dedicated GUI (Graphical User Interface) screens.

Typically the Set-Top-Box comprises software modules that belong to various software layers such as an operating system (OS) and drivers, a middleware and an application. The OS operates directly on a hardware and is responsible for executing processes (programs), ensuring they have access to required and available memory and to a Central Processing Unit (CPU) time according to a process and thread scheduling policy. Also, the OS may provide a number of primitives such as process and task synchronization methods and a set of features as file management or networking. The middleware takes advantage of both the OS and drivers to compose high level software modules usually with advanced logic such as PSI/SI (Program-specific information/System Information) and EPG (Electronic Program Guide) engines, a multimedia player etc. There are also other high level features that may be implemented in the middleware, for example favourite/personal lists, bookmarks. The application layer is responsible for providing a Graphical User Interface (GUI) enabling the user to control the entire STB and be able to watch or listen to a variety of multimedia assets as live services.

In known solutions typically the middleware offers only low level functionalities (such as a basic PSI/SI engine) or just provides an access to a tuner module and a demultiplexer Application Programming Interface (API) letting the application to use them to implement advanced features like various services scanning methods, favourite lists and categories support or access to collected Event Information Table (EIT) sections, both present/following and schedules from the actual and other transports leaving the decision which event should be displayed to the application if there are two or more events for a given service programme. This may be yet more complicated when there are various types of events available, for example apart from EIT sections also proprietary ones collected from a broadcast channel or retrieved by means of the Internet Protocol

Such an approach leads to a huge memory usage because of a need to store all the events and also the CPU overload due to a need to process these events, for example to merge them or decide which one to use for a given service and a time range. Similarly problems occur with recorded video assets kept on a local storage like the built-in Hard Disk Drive or available on a remote head-end. All these assets may be exposed to the application by individual modules like the local PVR recorder, a network PVR and VoD managers. Again, this entails that the application must implement some high level logic with various handlers to present all such assets to the user in a unified way.

Moreover a local search engine running within the STB is expected to provide possible results from every set of item types, i.e. live services, recordings, EPG events and the like. However, because there are independent modules managing individual item types, this entails that every such module must include its own search engine and the final search result is merged afterwards. Furthermore, different item types may have independent data models, even if they fall into the same category.

The aforementioned drawbacks lead to overcomplicating the application layer and cause that incorporating new features may require rewriting or refactoring of the application source code. Whenever the application is to be replaced with another one, the new application must be either integrated with the old application modules or they have to be created from the scratch.

Therefore, there is a need to simplify the structure of the digital television receiver in which applications can have a simplified access to content-related objects available from multiple sources and in which the middleware can be easily extended with new features or replaced with another application.

### SUMMARY

There is disclosed herein a digital television receiver comprising: hardware components comprising a processing unit, a memory and at least one content interface; a software stack that comprises an operating system layer, a middleware layer and an application layer; wherein the middleware comprises: a database having at least one table comprising objects representing content-related objects available from various content sources accessible via the at least one content interface; and at least one application programming interface configured to allow access to the database for applications of the application layer.

Preferably, the middleware is configured to provide a main table of the database with a single entry only for content-related objects available from different sources.

Preferably, the middleware is configured to provide a helper table of the database with grouped services referring to the same content from different sources.

Preferably, the middleware is configured to provide a unique object identifier related to each content-related object in the main table.

Preferably, the middleware is configured to hide services in the helper table which are not available.

There is also disclosed a method for managing information on content-related objects in a digital television receiver, wherein the digital television receiver comprises: hardware components comprising a processing unit, a memory and at least one content interface; and a software stack that comprises an operating system layer, a middleware layer and an application layer; wherein the method comprises: storing data on content-related objects available from various content sources accessible via the at least one content interface in a database of the middleware, wherein the database has at least one table comprising objects representing the content-related objects; providing access to the database for applications of the application layer via at least one application programming interface of the middleware.

There is also disclosed a computer program comprising program code means for performing all the steps of the computer-implemented method described herein when said program is run on a computer, as well as a computer readable medium storing computer-executable instructions performing all the steps of the computer-implemented method as described herein when executed on a computer.

### BRIEF DESCRIPTION OF DRAWINGS

The method and system presented herein are presented by means of example embodiments on a drawing, wherein:
Fig. 1A shows a Set-Top-Box software stack with hardware layer;
Fig. 1B shows a structure of a middleware;
Fig. 1C shows a structure of the hardware layer;
Fig. 2 shows an SQL database of the middleware;
Fig. 3 shows an example of a table and examples of common and specific properties of objects;
Figs. 4A-4B show an exemplary method for generating an object identifier for broadcast local live services;
Fig. 5 shows a method enabling to link various sources of a given live service into a single object with a scheme for generating object identifiers;
Fig. 6 shows a method for selecting the most appropriate source of content by taking into account preferred and available (free) resources.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### DETAILED DESCRIPTION

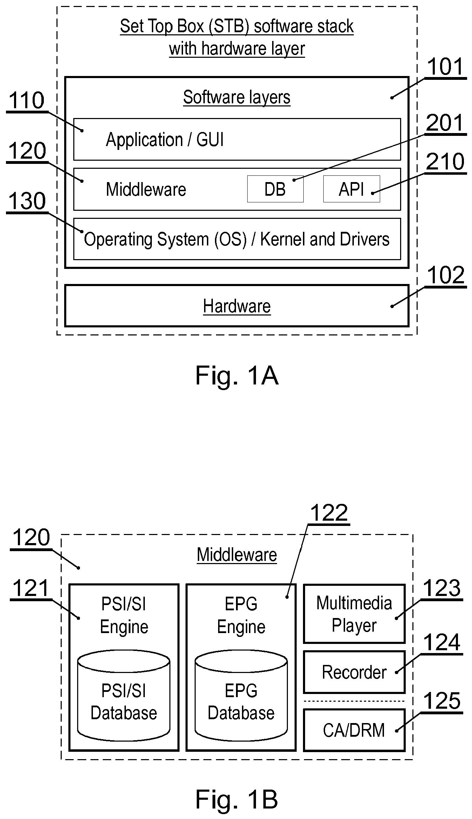

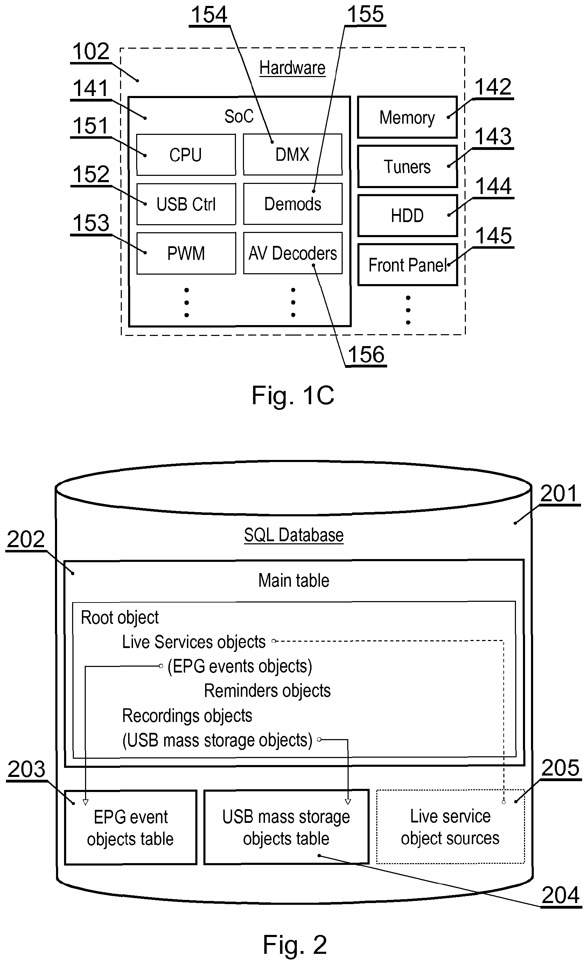

Fig. 1A shows a Set-Top-Box software stack with hardware layer. Details of a structure of a middleware are presented in Fig. 1B, while a structure of the hardware layer is presented in Fig. 1C. The Set-Top-Box (STB) comprises software modules that belong to various software layers 101. Typically, these layers are - from the bottom to the top - an operating system (OS) and drivers 130, a middleware 120 and an application (for example GUI) 110. The OS is responsible for executing processes (programs), ensuring they have access to required and available memory 142 and to a Central Processing Unit (CPU) 151 time according to a process and thread scheduling policy. The OS also provides a number of primitives such as process and task synchronization methods and a set of features such as file management or networking. In order to achieve these goals the OS operates directly on the hardware 102, similarly as drivers, which provide means to control various hardware components, for example a System-on-Chip (SoC) 141 built-in features such as Pulse Width Modulation (PWM) 153, a Universal Serial Bus (USB) controller 152, Demultiplexers (DMX) 154, Demodulators 155 or Audio/Video Decoders 156. It further comprises content interfaces such as satellite/cable/terrestrial Tuners 143, a Network Interface Controller (NIC) or a Hard Disk Drive (HDD) 144. A Front Panel 145 is used to provide basic communication with the user. Typically, drivers 130 are aimed at supplying primitive functions without complex logic and together with the OS provide a hardware abstraction layer meaning that higher software layers may be truly hardware independent.

The next software layer is the middleware 120, which takes advantage of both the OS and drivers 130 to compose high level software modules usually with advanced logic such as PSI/SI (Program-specific information/System Information) 121 and EPG (Electronic Program Guide) 122 engines, a multimedia player 123, a DVR/PVR (Digital Video Recorder/Personal Video Recorder) 124, Multiroom (MR) servers, renderers, players and a Multiscreen (MS) support. There are also other high level features that may be implemented in the middleware, for examples favourite/personal lists, DVR/PVR/MR/MS bookmarks, a subscriber information module, a live service EPG event reminder, a built-in/local recommendation engine, a search engine and many others. Usually also a module responsible for entitlements to access multimedia content as Conditional Access (CA) or Digital Rights Management (DRM) technologies 125 may be considered as a part of the middleware.

The last layer is the application 110 layer, which is the most top level layer of the STB software stack 101. The application 110 layer is responsible for providing a Graphical User Interface (GUI) enabling the user to control the entire STB and be able to watch or listen to a variety of multimedia assets such as live services (broadcast or MR channels), recordings (stored locally or remotely) from a MR server or a network DVR - Catch-Up and network-originated assets. The application 110 layer presents also to the user a set of information associated with the available multimedia content such as the EPG information or recommended items.

In the present invention the middleware is aimed at avoiding implementing non-GUI-related parts of features in the application. Referring to the Model-View-Controller (MVC) architectural pattern, the middleware is the model, while both the view and controller are implemented within the application. The middleware is based on an SQL engine that stores one or more tables metadata of all objects such as live services, recordings or EPG event, regardless of the source of these objects. All of the objects have a base (common) set of properties enabling to identify the object. The properties include: an STB-wide unique identifier, the parent identifier, class, and name. Each object of a given class has a specific set of properties, for instance live services include - among other properties - the channel number and the URL enabling to present (play) the service. In case of recordings exemplary properties are: a recording scheduled start time, its duration, state and others. For EPG events properties include - for instance - a detailed description of an event, its genres or a parental rating value.

The base properties are required. Each class has its own specific metadata divided into two subsets: required and optional. The required properties are guaranteed to always exist, while the optional ones may but do not have to be provided by individual providers. An example include an event poster URL which is not available in events from EIT sections but may be added to proprietary events available in proprietary broadcast sections or from an IP event head-end. Owing to this approach the application handles only one data model of objects belonging to a given class and may be ready to display additional metadata as the aforementioned posters.

The middleware SQL database 201 comprises objects representing content-related objects available from various content sources accessible via the at least one content interface 143, 144. The content-related objects may represent for example live services, recordings, EPG events. The example embodiment described herein relates mostly to EPG events, but a skilled person will realize that the other types of the content-related objects may be equally used in place of the EPG events as described herein. It may have one main table for objects of most classes and zero or more class specific tables. Furthermore, there may be additional helper tables allowing to group objects of a certain class available from different sources. Fig. 2 shows an SQL database 201 with a main table 202 for the root object, live services, recordings and reminders and two specific tables for an EPG event 203 and media objects 204 available from a USB mass storage device connected to the STB. The SQL database also comprises a helper table 205 for grouping live services referring to the same content from different sources. While queering objects from the database, the main table and the specifics tables are joined in the query. On the other hand, the helper table 205 is queried independently to find the exact URL of a live source and a list of needed hardware resources like the tuner, demodulator, IP bandwidth and the like. Methods responsible for managing live service sources and deciding which shall be used in a response to a play request are addressed in further paragraphs.

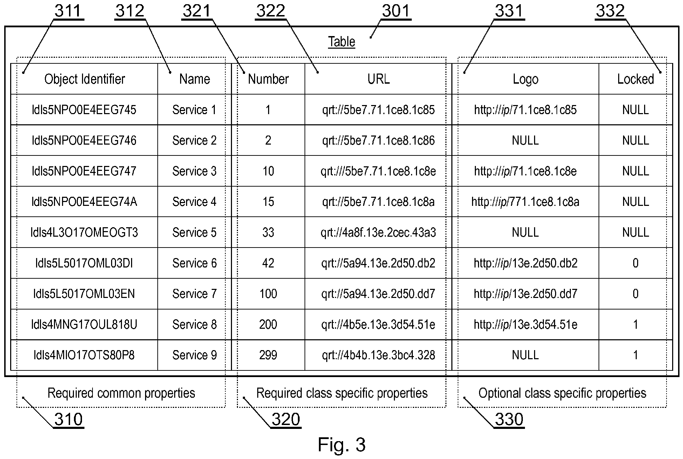

Fig. 3 shows an example of a table and examples of common and specific properties of objects. A single object is represented in the database as a row, while each property of the object refers to the table column. Some properties are common for all objects, while other are specific for a given object class. These specific properties may be either required and their values are non-empty, or optional meaning that their values do not have to exist and are equal to NULL. The table 301 comprises live service objects with common properties 310 such as "Object Identifier" 311 and "Name" 312 which are required also for other objects belonging to any class, for example EPG events or recordings. The "Name" 312 property includes the service name, while the "Object Identifier" 311 is a unique and it serves as the main key in the table. There are also shown live service objects specific properties: required 320 and optional 330. The required properties 320 with the same name may optionally appear also in case of objects belonging to other classes. In this example there are two required class-specific properties: "Number" 321 and "URL" 322, where the former is the service number the user may enter by means of a remote control to select the service, while the latter property is the service URL that may be passed over to the multimedia player 123 as to play the service. In this example an URL "qrt://" scheme is used, which includes a quartet of PHID.ONID.TSID.SID addressed later in this invention. There is also a pair of optional specific properties 330: "Logo" 331 and "Locked" 322. The first one may contain an URL to an image with the service logo for displaying it by the GUI if available, while the other property specifies if the service is locked by operator meaning, for example, that the user must enter the PIN to watch or listen to the service.

Object identifiers reflect the hierarchical structure of objects. For example, there is the root object containing one local device (this STB) and zero or more remote devices (MR STB servers). The local device includes under the root node, for example, live services, recordings, categories. A live service is the parent node for events belonging to the live service. An event may be the parent node for reminders and a bookmark may be child of a recording. Individual objects may be referred in this hierarchical structure more than once, for example a live service, as already mentioned is a child of a local device, but it may also be a child of the category parent node. However, it is possible not to follow the hierarchy structure, as long as the module, responsible for allocating object identifiers for objects belonging to a given class, ensures that the identifiers are STB-wide unique. An example includes reminders that may be available under a folder being a direct child of the root node, providing their identifiers are unique. This approach may reduce the length of certain object identifiers and hence limit the required memory.

Objects of a given class can be kept in the main table or in a dedicated table for a given object class, depending on the system configuration. In some cases it may be more effective to store objects of most classes in the same table, whereas for some objects belonging to a specific class it may be reasonable to keep them in a dedicated table as not to block the main table because of constant accessing and altering objects such as EPG events.

In case of the main table objects belonging to different classes, they can share internally the same column name of the same type by a method enabling to map their property names to an internal column name as to save space required by the main table.

Objects of the same class may be supplied by various providers. Examples include: live services from a broadcast channel, a MR STB server, an IP head-end; recordings from a local mass storage device, a MR STB server, a network PVR, a remote VoD system; EPG events from various sources and plurality of data formats: a broadcast channel, an IP head-end, a MR STB server; standard or proprietary section-based or JavaScript Object Notation (JSON) formats. Each set of object belonging to a given class share the same set of properties (data model, metadata).

Certain objects available from various sources may refer to the same content. An example includes a live service available locally from a broadcast channel, from a MR STB server and from an IP head-end. Such services may be presented to the user as a single object, while the actual source where it is played from is hidden and depends on the system/middleware and available resources. For the aforementioned example, the middleware may decide to play the live service from a MR STB server or an IP head-end (e.g. depending if there is Internet connectivity or only local network available), because the local tuner is being in use for recording of a service belonging to another transport stream. In this case the user would have to cancel the recording session to watch the selected live service. Instead, the middleware may hide that and play the live service from another source available at a time.

Objects existing in the database are not duplicated, even if they come from various providers. An example include EPG events - for a particular live service and a time period there may be only one event at a time, so that the application could display its required and optional metadata in a straightforward way without any knowledge where an event comes from.

Since all objects metadata are stored in the SQL database they can be easily searched without any need to implement a dedicated search feature per module of a class or classes. Search queries may be as complex as an SQL query is. Furthermore, if the SQL engine supports full text search (FTS) technique, it may be used as well.

For the application all the objects are available by a plurality of APIs 210 (with the same functionalities) and the same well-defined data model. Example of different APIs include a C API, a JavaScript API, a RESTful API, a MR API based on common standards as Universal Plug and Play (UPnP) or Digital Living Network Alliance (DLNA) with possible proprietary extensions to services, actions and properties. The APIs are configured to allow access to the database 201 for applications of the application 110 layer.

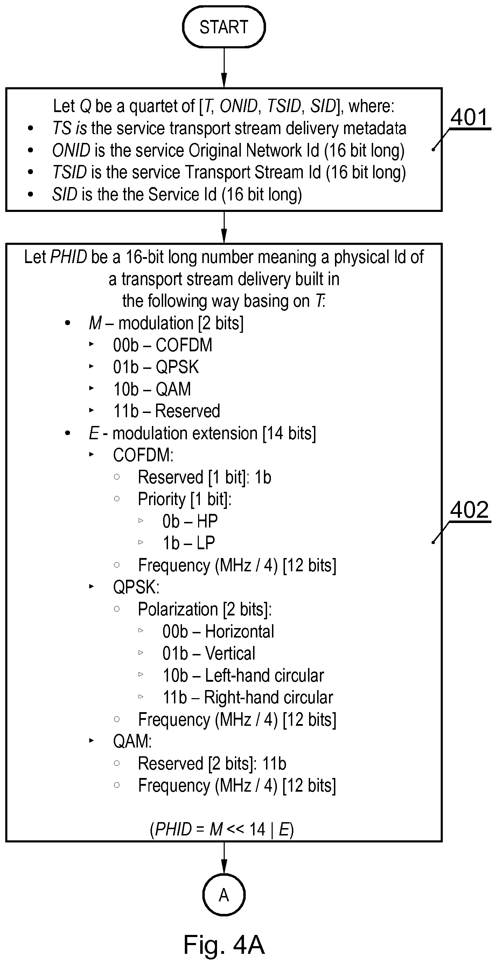

Figs. 4A-4B show an exemplary method for generating an object identifier for broadcast local live services. In the following description, the following notations are used to indicate arithmetic and bitwise operations:
- "<< N" means shifting left by N bits (adds zeros at the right end);
- ">> N" means shifting right by N bits (adds zeros at the left end);
- "|" means a bitwise OR;
- "/" means a division.

As already mentioned before the value of the object identifier is unique in the database and identifies a given object unambiguously in the STB database and its value reflects the object hierarchy. This means that a given object identifier contains the identifier of its parent plus a value identifying clearly the given object within all objects of the parent. The object identifier is a string comprising two small letters and zero or more capital letters and digits. There is an exception to the root node, which is an empty string. For example, the root node object identifier value is an empty string, the local device is "Id" ("Id" for "local device"), a live service (local, i.e. available from the given STB tuner) is "ldls5NPO0E4EEG747" ("ls" for "live service"), an EPG event object identifier may be equal to "ldls5NPO0E4EEG747eeF123" ("ee" for "EPG event"). It is essential to ensure that generated object identifiers are short as possible as to save the STB memory, as - in context of this example - a live service may be the parent object of thousands of the EPG event objects.

First, in step 401 in which four input parameters are provided: a set of delivery metadata of the transport stream (TS) which the service belongs to, the 16-bit long Original Network Identifier (ONID) of the service TS, the 16-bit long Transport Stream Identifier of the service TS (TSID) and the 16-bit long Service Identifier (SID). The delivery metadata comprises such information as the modulation (COFDM, QPKS, QAM) and depending on the modulation type such data as the TS priority (COFDM) or polarization (QPSK). The three identifiers, i.e. ONID, TSID and SID are known as a Digital Video Broadcasting (DVB) triplet and uniquely identify a service across a number of transport streams. Regardless of the modulation used, the TS frequency is also specified. Next, in step 402 a 16-bit long PHID (Physical Identifier) variable is built basing on the metadata of the service TS. The PHID variable enables to uniquely identify a service in case it would be available on a number of transport streams of different delivery metadata. An example include a service broadcast over a satellite link by means of the QPKS modulation and the same service accessible through a converted transport stream to QAM modulation and received by a cable tuner. The PHID value comprises two fields M (modulation, 2-bit long) and E (modulation extension, 14-bit long) and is built in the following manner: initially, M is set to one of these values: 00b for COFM modulation, 01b for QPSK modulation and 10b for QAM modulation, the value of 11b is unused (reserved). Then, E is assigned with the following values, depending on the modulation used: for COFDM the most significant bit is reserved and always set to 1b, the next bit is set to 0b or 1b depending if the transport stream is of high or low priority, respectively, while remaining 12 bits are used for the TS frequency in MHz divided by 4. For QPSK modulation, the two most significant bits represent the polarization used: 00b for horizontal, 01b for vertical, 10b for left-hand circular and 11b for right-hand circular, while remaining 12 bits are used for the TS frequency in MHz divided by 4. In case of QAM modulation the two most significant bits are not used (reserved) and are set to 11b, while remaining 12 bits are used for the TS frequency in MHz divided by 4, as in previously described modulations. Finally, the PHID value is created by assigning M shifted left by 14 bits with inserting zeros on right and adding E (PHID = M << 14 | E). Next, the method jumps to step 403 to build N, which is a 64-bit long number comprising the values of PHID, ONID, TSID and SID on the following bits accordingly: PHID - 63rd-48th bits (PHID shifted left by 48 bits; PHID << 48), ONID - 47th-32nd bits (ONID shifted left by 32 bits; ONID << 32), TSID - 31st-16th bits (TSID shifted left by 16 bits; TSID << 16), SID - 15th-0th bits; N = PHID << 48 | ONID << 32 | TSID << 16 | SID. Next, in step 404 an empty text (string) variable S is created and the following loop is repeated exactly 13 times: to the D variable are assigned 5 least significant bits of N. Then at the beginning of the S variable a character is added as follows: for D in range between 0 and 9 a character between '0' and '9' is added accordingly (e.g. '5' for 5); for D in range between 10 and 31 a character between 'A' and 'V' is added accordingly (e.g. 'U' for 30). Then, N is shifted right by 5 bits (N = N >> 5) with inserting zeros on the left. As a result of this step, the S variable is a 13-character long string containing a 64 bit number identifying uniquely the service by a PHID and the DVB triplet - ONID, TSID, SID. Next, in step 405 to the S variable is added "Is" at its beginning to enable identifying this object as a live service class and if the live service is local (e.g. playable by tuning the STB tuner to the service transport stream), the string "Id" is added at the beginning of S. For a remote device another identifier would be added, for example "rd1" meaning a remote device with index 1. Next, in step 406 the object identifier is created and it is unique in context of a given STB. Because each digit of the 64 bit-long quartet (PHID.ONID.TSID.SID) is a 32-base number, the identifier takes 3 characters less than in case when it would be encoded as a 16-based number (hexadecimal) and much more if, for example, decimal or octal numbers would be used. As already mentioned, a live service object may be a parent for other objects such as EPG events, which occur in tens of thousands of instances in a typical STB environment. By reducing the length of object identifiers a meaningful amount of memory required for the EPG events in the SQL database may be used for other purposes or functional ities.

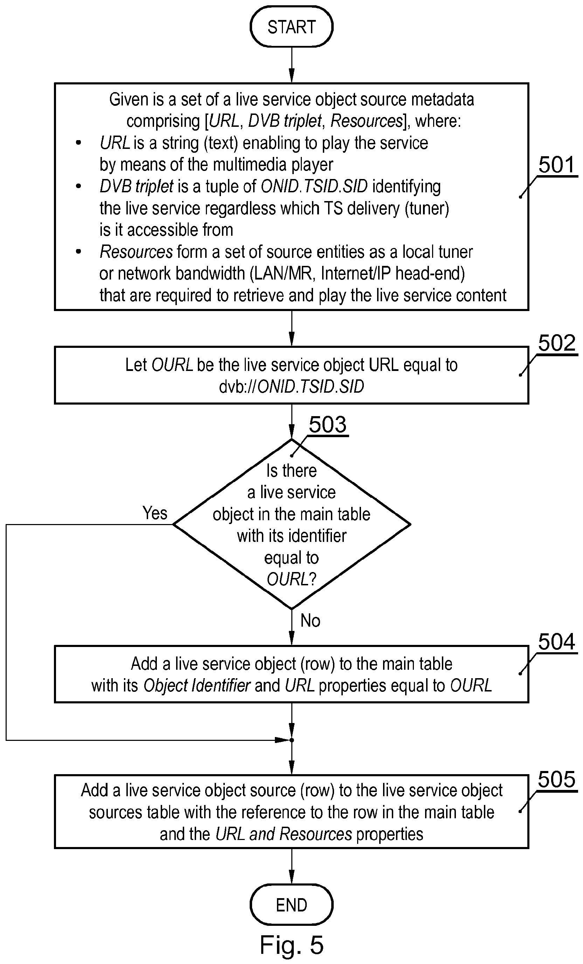

Fig. 5 shows a method enabling to link various sources of a given live service into a single object with a scheme for generating object identifiers. Objects of a given class may be provided by a plurality of sources like a broadcast channel, an IP head-end or a MR STB server. Hence, it may happen that a given object has more than one instances, still the middleware may expose only a single object to the application, although it may refer to more than one source of different types, yet with the same content.

The method uses the main table 202 where live service objects are stored, which references to actual different sources of the same content are kept in the live service object sources table 205. A live service object does not contain a directly playable URL (as qrt:// or http://), instead a DVB triplet URL (as a required class-specific metadata) is used to identify the live service object without determining transmission channels (such as satellite/cable/terrestrial tuners, a MR STB server or an IP head-end to name few). First, in step 501 in which a set of a given live service object source metadata is accepted: the URL playable directly by the multimedia player 123, the DVB triplet comprising ONID.TSID.SID values identifying the live service unambiguously, however without the said PHID part, as the delivery is not taken into account - even for an IP-originated live service (i.e. with the URL scheme as http://), the DVB triplet is required and it is up to the live service object source provider to supply it (e.g. as metadata of a live service exposed by a MR STB server or by some properties associated with the content exposed by an IP head-end). The last metadata is a set of Resources specifying which resources such as a tuner or a required network bandwidth (LAN for a service exposed by a MR STB server or the Internet for a service available at an IP head-end) are required to retrieve and play the live service content. Next, in step 502 the OURL variable is assigned with the value equal to dvb://ONID.TSID.SID. Such an OURL variable value is unique across all live service objects and hence it may be used as a live service object identifier. Next, in step 503 it is checked if there is already a live service object in the main table 202 with its identifier equal to OURL. If it does not exist, the method proceeds to step 504 in which a new entry to the said main table is added with the Object Identifier and URL properties equal to OURL. Otherwise, if the live service object with the identifier equal to OURL is not present in the main table 202, the method jumps to step 505 in which a new entry in the live service object sources table 205 is added with the reference to the row in the main table of the live service object and the URL and Resources properties. Then the method terminates.

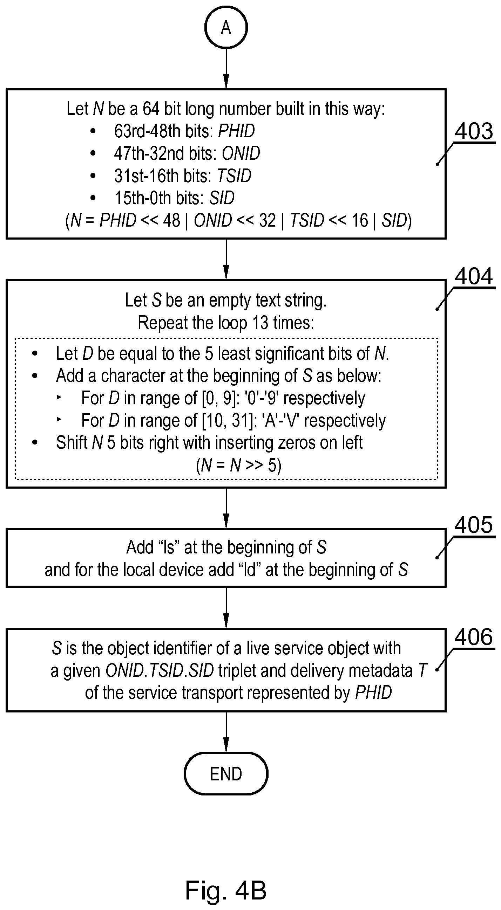

It is worth noting that the Object Identifier may be built as shown in Fig. 4 also in case of non-local live services, for example MR STB server-originated. However, in such a case merging various sources of a live service object must be disabled and the source provider must also expose the PHID value or metadata allowing to build it. In such a case various source of the same content shall be visible as independent live service objects. Their Object Identifiers shall be different, for example in case of the local device (the STB a live service is directly tunable to) the value of the Object Identifier may be "ldls5NPO0E4EEG747", while the same service available from a MR STB server may be identified as "rd1ls5NPO0E4EEG747". Obviously, when merging various sources of a live service object is disabled, the live service object URL is directly playable by the multimedia player 123 (which is not true with the method depicted in Fig. 5).

Preferably, when the last entry in the live service object sources table 205 with the reference to a given row in the main table 202 is removed, for example because of turning off a MR STB server, the related live service object is also removed from the main table meaning that the GUI 110 is not able to select it anymore.

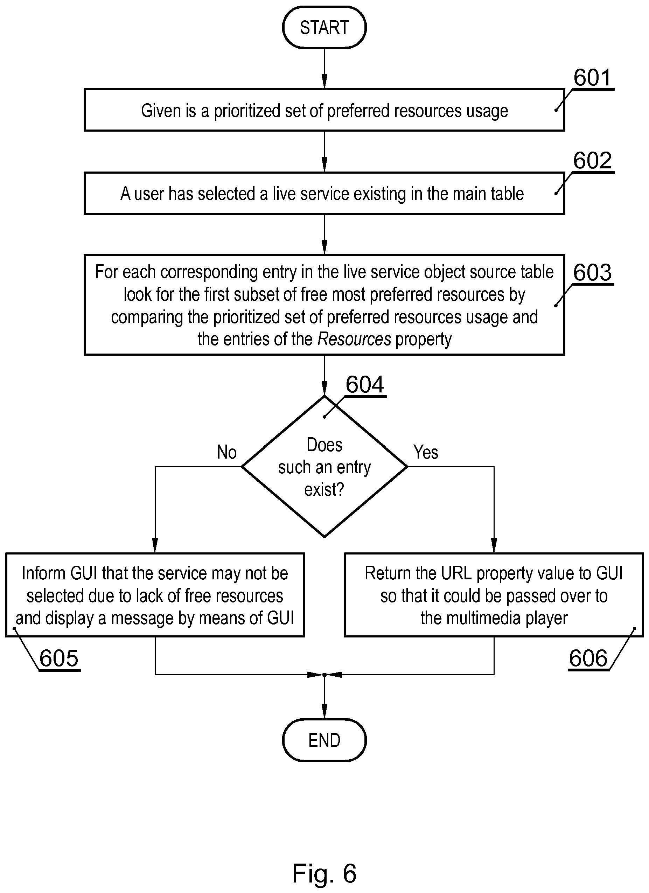

Whenever the application attempts to play a multimedia object, it may happen that it has more than one source added through the method depicted in Fig. 5. In such a case the middleware may decide which source a given object is to be played from. Fig. 6 shows a method for selecting the most appropriate source of content by taking into account preferred and available (free) resources. First, in step 601 a prioritized set of preferred resources usage is provided. Next, in step 602 the user selects a live service existing in the main table. Next, in step 603 the method examines each entry in the live service object source table 205 referencing to the selected live service object in the main table 202 - it searches for the first subset of free most preferred resources by comparing the prioritized set of preferred resources usage and the entries of the Resources property. Next, in step 604 it is checked if such an entry is found. If not, the method jumps to step 605, in which the GUI 110 is notified that the service object may not be selected (played) due to lack of required resources (being used by other modules, for example the recorder 124), so that a relevant message could be displayed on the screen. Otherwise, if in the step 604 such an entry is found, the method advances to step 606, in which the GUI is given with the found entry URL so that it could be passed over to the multimedia player 123. Then, the method terminates.

Preferably, whenever lack of resources has been detected, the GUI may display a list of ongoing sessions (recordings in progress, streaming live service content to one or more MR STB clients or MS devices) and let the user decide whether and if yes - which one to cancel as to get access to the required resources and play the selected live service object content. Similarly, the GUI may display a pop-up or a corner message on detection of changes in the list of free resources to inform the user of possibility to switch for example from a source as MR STB server to the local tuner. Such an action may be also performed automatically, however in such a case some audio/video frames may be lost or repeated due to possible lack of synchronization of various content sources - a corner message is desired to be displayed in such a situation. Furthermore, also another approach may be applied, for example the STB may always force to use the local tuner if a given live service is available from it; this may result in reducing overusing scarce resources, but may also lead to situation where a MR STB client lost access to a service being presented by that STB.

The present invention describes an SQL-engine-powered middleware with advance logic implemented on the top of low level OS and drivers primitives and exposing high level functionalities to plurality of clients, for example an application/GUI.

Owing to the fact that the middleware implements various modules like PSI/SI and EPG engines, no duplications in data occur. Furthermore, if there are events available from many sources, the middleware ensures that for a given service and an event time range only a single event instance is stored in the database. Such an approach allows the middleware to manage the STB memory and CPU time in an effective way. Similarly, a single multimedia player enabling to play any content from any source simplifies the GUI architecture - there is always only one API the GUI uses.

The middleware exposes a well-defined data model for all object classes, regardless where a given object comes from. For example, if there are various sources of live service objects, such as the local tuner, a MR STB server and an IP head-end, all live services available from these sources share the same data model. The same approach concerns other objects, for example EPG events, which may be retrieved from EIT sections, some proprietary EIT sections or downloaded over an IP link, for example, in JSON format. Another example are video assets as recordings, Catch-Up or VoD items. The common data model ensures that the application shall seamlessly handle new providers (in this example: of live services EPG events, video assets).

Since all objects are kept in the SQL database any method applied for a given class affect all objects of that class regardless where they have been received from. For example, in case of live service objects this may be the aforementioned method to generate memory-effective Object Identifiers. Similarly, the middleware may in a common and effective way handle individual objects in various manner, for example merging live services available at different sources into a single object. Later, this enables to perform additional method for selecting the best or available source of an object for its presentation.

Internally, the middleware may introduce additional dedicated tables (for example for an EPG event) to avoid blocking the main table when a huge number of events is being accessed. Furthermore, because all data is kept in the SQL database, there is only one search engine and there is no need to implement such search engines by every module or provider.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for managing content-related objects may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A digital television receiver comprising:
- hardware (102) components comprising a processing unit (151), a memory (142) and at least one content interface (143, 144);
- a software stack that comprises an operating system (130) layer, a middleware (120) layer and an application (110) layer;
- wherein the middleware (120) comprises:
- a database (201) having at least one table (202-205) comprising objects representing content-related objects available from various content sources accessible via the at least one content interface (143, 144);
- and at least one application programming interface (210) configured to allow access to the database (201) for applications of the application (110) layer.

2. The digital television receiver according to claim 1, wherein the middleware (120) is configured to provide a main table (202) of the database (201) with a single entry only for content-related objects available from different sources.

3. The digital television receiver according to claim 1 or 2, wherein the middleware is configured to provide a helper table (205) of the database (201) with grouped services referring to the same content from different sources.

4. The digital television receiver according to any of previous claims, wherein the middleware is configured to provide a unique object identifier related to each content-related object in the main table.

5. The digital television receiver according to claim 3, wherein the middleware is configured to hide services in the helper table (202) which are not available.

6. A method for managing information on content-related objects in a digital television receiver, wherein the digital television receiver comprises:
- hardware (102) components comprising a processing unit (151), a memory (142) and at least one content interface (143, 144); and
- a software stack that comprises an operating system (130) layer, a middleware (120) layer and an application (110) layer;
wherein the method comprises:
- storing data on content-related objects available from various content sources accessible via the at least one content interface (143, 144) in a database (201) of the middleware (120), wherein the database (201) has at least one table (202-205) comprising objects representing the content-related objects;
- providing access to the database (201) for applications of the application (110) layer via at least one application programming interface (210) of the middleware (120).

7. A computer program comprising program code means for performing all the steps of the computer-implemented method according to claim 6 when said program is run on a computer.

8. A computer readable medium storing computer-executable instructions performing all the steps of the computer-implemented method according to claim 6 when executed on a computer.
